(19) Europäisches Patentamt
European Patent Office
Office européen des brevets

(11) EP 2 699 629 B1

(12) **EUROPÄISCHE PATENTSCHRIFT**

(45) Veröffentlichungstag und Bekanntmachung des Hinweises auf die Patenterteilung:
**06.04.2016 Patentblatt 2016/14**

(21) Anmeldenummer: **12713756.0**

(22) Anmeldetag: **16.04.2012**

(51) Int Cl.:
***C08K 3/00*** *(2006.01)*

(86) Internationale Anmeldenummer:
**PCT/EP2012/056871**

(87) Internationale Veröffentlichungsnummer:
**WO 2012/143314 (26.10.2012 Gazette 2012/43)**

(54) **LASERTRANSPARENTE POLYESTER MIT ALKALINITRITEN**

LASER-TRANSPARENT POLYESTER CONTAINING ALKALI NITRITES

POLYESTER TRANSPARENT AU LASER CONTENANT DES NITRITES ALCALINS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2011 EP 11163122**

(43) Veröffentlichungstag der Anmeldung:
**26.02.2014 Patentblatt 2014/09**

(73) Patentinhaber: **BASF SE**
**67056 Ludwigshafen am Rhein (DE)**

(72) Erfinder:
- **BENTEN, Rebekka von**
  **67063 Ludwigshafen (DE)**
- **EIBECK, Peter**
  **67346 Speyer (DE)**

(56) Entgegenhaltungen:
**US-A- 4 349 503 US-A1- 2003 220 436**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 699 629 B1

## Beschreibung

Die Erfindung betrifft die Verwendung von thermoplastischen Formmassen, enthaltend als wesentliche Komponenten

A) 29 bis 99,99 Gew.-% eines Polyesters,

B) 0,01 bis 3,0 Gew.-% eines Alkalimetallsalzes der salpetrigen Säure oder deren Mischungen, bezogen auf 100 % Gew.-% A) und B) sowie darüber hinaus

C) 0 bis 70 Gew.-% weiterer Zusatzstoffe, wobei die Summe der Gew.-% A) bis C) 100 % ergibt,

zur Herstellung von lasertransparenten Formkörpern jeglicher Art.

Weiterhin betrifft die Erfindung die Verwendung der lasertransparenten Formkörper zur Herstellung von Formkörpem mittels Laserdurchstrahlschweißverfahren, Verfahren zur Herstellung derartiger Formkörper sowie deren Verwendung in unterschiedlichen Anwendungsbereichen.

Derartige Komponenten B) sind Keimbildner für PET und verwandte Polyester. So beschreibt US 4349505 die Verwendung von Natriumnitrit in PET. Die optischen Eigenschaften der Compounds wurden nicht untersucht.

Für die Verschweißung von Kunststoffformteilen existieren verschiedene Verfahren (Kunststoffe 87, (1997), 11, 1632 - 1640). Voraussetzung für eine stabile Schweißnaht ist im Falle der weit verbreiteten Verfahren des Heizelementschweißens und des Vibrationsschweißens (z. B. von KFz-Saugrohren) ein ausreichendes Erweichen der Verbindungspartner in der Kontaktzone vor dem eigentlichen Fügeschritt.

Als alternative Methode zum Vibrationsschweißen und Heizelementschweißen findet das Laserdurchstrahlschweißen, insbesondere mit Diodenlaser in letzter Zeit immer stärkere Verbreitung.

Grundlegende Prinzipien des Laserdurchstrahlschweißens sind in der Fachliteratur beschrieben (Kunststoffe 87, (1997) 3, 348 - 350; Kunststoffe 88, (1998), 2, 210 - 212; Kunststoffe 87 (1997) 11, 1632 - 1640; Plastverarbeiter 50 (1999) 4, 18 -19; Plastverarbeiter 46 (1995) 9, 42 - 46).

Voraussetzung für die Anwendung des Laserdurchstrahlschweißens ist, dass die vom Laser emittierte Strahlung zunächst ein Formteil durchdringt, das für Laserlicht der eingesetzten Wellenlänge ausreichend transparent ist und im Folgenden dieser Anmeldungsschrift als lasertransparentes Formteil bezeichnet wird, und dann von einem zweiten Formteil in einer dünnen Schicht absorbiert wird, das das lasertransparente Formteil kontaktiert und im Folgenden laserabsorbierendes Formteil genannt wird. In der dünnen Schicht, die das Laserlicht absorbiert, wird die Laserenergie in Wärme umgewandelt, die zum Aufschmelzen in der Kontaktzone und letztlich zur Verbindung des lasertransparenten und des laserabsorbierenden Formteils durch eine Schweißnaht führt.

Für Laserdurchstrahlschweißen werden üblicherweise Laser im Wellenlängenbereich von 600 bis 1200 nm eingesetzt. Im Bereich der Wellenlänge der für das Thermoplastschweißen eingesetzten Laser sind Nd:YAG-Laser (1064 nm) oder Hochleistungsdiodenlaser (800 - 1000 nm) üblich. Wenn im Folgenden die Begriffe lasertransparent und laserabsorbierend verwendet werden, beziehen sie sich immer auf den oben genannten Wellenlängenbereich.

Für das lasertransparente Formteil ist im Gegensatz zum laserabsorbierenden Formteil eine hohe Lasertransparenz im bevorzugten Wellenlängenbereich erforderlich, damit der Laserstrahl bis zur Schweißfläche mit der erforderlichen Energie vordringen kann. Die Messung des Transmissionsvermögens für IR-Laserlicht erfolgt beispielsweise mit einem Spektralphotometer und einer integrierenden Photometerkugel. Diese Meß-anordnung detektiert auch den diffusen Anteil der transmittierten Strahlung. Es wird nicht nur bei einer Wellenlänge, sondern in einem Spektralbereich gemessen, der alle z. Zt. für den Schweißvorgang eingesetzten Laserwellenlängen umfasst.

Heute stehen dem Anwender mehrere Laserschweißverfahrensvarianten zur Verfügung, die alle auf dem Durchstrahlprinzip beruhen. So stellt das Konturschweißen einen sequenziellen Schweißprozess dar, bei dem entweder der Laserstrahl entlang einer frei programmierbaren Nahtkontur geführt oder das Bauteil relativ zum fest installierten Laser bewegt wird. Beim Simultanschweißen wird die linienförmig emittierte Strahlung einzelner Hochleistungsdioden entlang der zu schweißenden Nahtkontur angeordnet. Das Aufschmelzen und Verschweißen der gesamten Kontur erfolgt somit zeitgleich. Das Quasi-Simultanschweißen stellt eine Kombination aus dem Kontur- und dem Simultanschweißen dar. Der Laserstrahl wird mit Hilfe von galvanometrischen Spiegeln (Scannern) mit einer sehr hohen Geschwindigkeit von 10 m/s und mehr entlang der Schweißnahtkontur geführt. Durch die hohe Verfahrgeschwindigkeit wird der Fügebereich nach und nach erwärmt und aufgeschmolzen. Gegenüber dem Simultanschweißen besteht eine hohe Flexibilität bei Veränderungen der Schweißnahtkontur. Das Maskenschweißen ist ein Verfahren, bei dem ein linienförmiger Laserstrahl quer über die zu fügenden Teile bewegt wird. Durch eine Maske wird die Strahlung gezielt abgeschattet und trifft nur dort, wo geschweißt werden soll, auf die Fügefläche. Das Verfahren erlaubt die Herstellung sehr exakt positionierter Schweißnähte. Diese Verfahren sind dem Fachmann bekannt und z.B. in "Handbuch Kunststoff-Verbindungstechnik" (G. W. Ehrenstein, Hanser, ISBN 3-446-22668-0) und / oder DVS-Richtlinie 2243 "Laserstrahlschweißen

thermoplastischer Kunststoffe" beschrieben.

Unabhängig von der Verfahrensvariante ist der Laserschweißprozess stark abhängig von den Materialeigenschaften der beiden Fügepartner. Der Grad der Lasertransparenz (LT) des durchstrahlten Teils beeinflusst direkt die Prozessgeschwindigkeit durch die pro Zeit einbringbare Energiemenge. Teilkristalline Thermoplaste haben in der Regel eine geringere Lasertransparenz durch ihre inhärente Mikrostruktur, meist in Form von Spheruliten. Diese streuen das eingestrahlte Laserlicht stärker als die innere Struktur eines rein amorphen Thermoplasten: Rückwärtsstreuung führt zu einer verminderten Gesamtenergiemenge in Transmission, diffuse (Seitwärts-) Streuung führt oftmals zu einer Aufweitung des Laserstrahls und somit Verlust in der Schweißpräzision. Bei Polybutylenterephthalat (PBT) sind diese Phänomene besonders stark ausgeprägt, es weist im Vergleich zu anderen, gut kristallisierenden Thermoplasten wie beispielsweise PA eine besonders niedrige Lasertransparenz und hohe Strahlaufweitung auf. Daher findet PBT noch vergleichsweise wenig Verwendung als Material für lasergeschweißte Bauteile, obwohl sein sonstiges Eigenschaftsprofil (z.B. die gute Dimensionsstabilität und geringe Wasseraufnahme) es für derartige Anwendungen sehr attraktiv sein lässt.

Eine teilkristalline Morphologie ist zwar allgemein hinderlich für eine hohe Lasertransparenz, sie bietet aber Vorteile bei anderen Eigenschaften. So sind teilkristalline Werkstoffe auch oberhalb der Glastemperatur mechanisch belastbar und besitzen im Allgemeinen eine bessere Chemikalienbeständigkeit als amorphe Werkstoffe. Schnell kristallisierende Werkstoffe bieten darüber hinaus in der Verarbeitung Vorteile, insbesondere eine schnelle Entformbarkeit und damit kurze Zykluszeiten. Wünschenswert ist daher die Kombination aus Teilkristallinität, schneller Kristallisation und hoher Lasertransparenz.

Es sind verschiedene Ansätze, die Lasertransparenz von Polyestern, insbesondere PBT zu erhöhen, bekannt. Grundsätzlich lassen diese sich unterscheiden in Blends/Mischungen und Brechungsindexanpassung.

Der Ansatz über Blends/Mischungen beruht auf einer "Verdünnung" des wenig lasertransparenten PBTs mit einem hoch lasertransparenten Blend-/Mischungspartner. Beispiele hierfür sind in den Schriften: JP2004/315805A1 (PBT + PC/PET/SA + Füllstoff + Elastomer), DE-A1-10330722 (allg. Blend eines teilkristallinen mit einem amorphen Thermoplasten zur Erhöhung der LT; spez. PBT + PET/PC + Glasfaser), JP2008/106217A (PBT + Copolymer mit 1,4-Cyclohexandimethanol; LT von 16% erhöht auf 28%). Nachteilig ist hierbei, dass zwangsweise Polymerblends entstehen, die deutlich andere Eigenschaften haben als Produkte, die überwiegend auf PBT als Matrix basieren.

Der Ansatz Brechungsindexanpassung bezieht sich auf die unterschiedlichen Brechungsindizes von amorphem und kristallinem PBT sowie der Füllstoffe. Hier wurden beispielsweise Comonomere eingesetzt: JP2008/163167 (Copolymer aus PBT und Siloxan), JP2007/186584 (PBT + Bisphenol A Diglycidylether) und JP2005/133087 (PBT + PC + Elastomer + hochrefraktives Silikonöl) seien als Beispiele genannt. Dies führt zwar zu einer Erhöhung der Lasertransparenz, allerdings auf Kosten der mechanischen Eigenschaften. Auch der Brechungsindexunterschied zwischen Füllstoff und Matrix kann verringert werden, siehe JP2009/019134 (Epoxyharz auf Glasfasern gecoatet, um den optischen Übergang zwischen Faser und Matrix anzupassen) oder JP2007/169358 (PBT mit hochbrechender Glasfaser). Derartige Einsatzstoffe sind jedoch nachteilig wegen ihrer hohen Kosten und/oder zusätzlichen Stufen im Herstellprozess.

Insgesamt sind die erzielten Effekte in Bezug auf die Erhöhung der Lasertransparenz auch relativ gering und daher verbesserungswürdig.

Die Aufgabe der vorliegenden Erfindung war es daher, die Lasertransparenz von Polyestern zu verbessern. Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 29 bis 99,99, bevorzugt 98,0 bis 99,95 und insbesondere 99,0 bis 99,9 Gew.% mindestens eines thermoplastischen Polyesters, bezogen auf die Komponenten A) und B).

Wenigstens einer der Polyester in Komponente A) ist ein teilkristalliner Polyester. Bevorzugt sind Komponenten A), die mindestens 50 Gew.% an teilkristallinen Polyestern enthalten. Besonders bevorzugt liegt dieser Anteil bei 70 Gew.-% (jeweils bezogen auf 100 Gew.-% A)).

Bezogen auf 100% der Formmassen aus A) bis C) (d.h. inklusive C)) enthalten diese

30 bis 100 Gew.% A) + B), vorzugsweise 50 bis 100

0 bis 70 Gew.% C), vorzugsweise 0 bis 50.

Wesentlicher Bestandteil der obigen Bezugsgrößen besteht darin, dass der Anteil der Komponente B) immer auf den Polyester bezogen ist, da dieses Verhältnis innerhalb der genannten Grenzen liegen soll. Die Zusatzstoffe C) können einen Einfluss auf die Lasertransparenz haben. Dieser hängt im Wesentlichen von den Streu- und Absorptionseigenschaften der Zusatzstoffe ab. Die optischen Eigenschaften des Compounds setzen sich im Wesentlichen additiv aus den optischen Eigenschaften der erfindungsgemäßen Matrix (Komponenten A+B) und denen der Additive (Komponenten C) zusammen.

Allgemein werden Polyester A) auf Basis von aromatischen Dicarbonsäuren und einer aliphatischen oder aromatischen Dihydroxyverbindung verwendet.

Eine erste Gruppe bevorzugter Polyester sind Polyalkylenterephthalate, insbesondere solche mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. t-Butylgruppen.
Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und I-sophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester (A) liegt im allgemeinen im Bereich von 50 bis 220, vorzugsweise von 80 bis 160 (gemessen in einer 0,5 gew.-%igen Lösung in einem Phenol/o-Dichlorbenzolgemisch (Gew.-Verh. 1:1 bei 25°C)) gemäß ISO 1628.

Insbesondere bevorzugt sind Polyester, deren Carboxylendgruppengehalt 0 bis 100 mval/kg, bevorzugt 10 bis 50 mval/kg und insbesondere 15 bis 40 mval/kg Poly-ester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte Formmassen enthalten als Komponente A) eine Mischung aus Polyestern, wobei mindestens einer PBT ist. Der Anteil z.B. des Polyethylenterephthalates beträgt vorzugsweise in der Mischung bis zu 50, insbesondere 10 bis 35 Gew.-%, bezogen auf 100 Gew.-% A).

Weiterhin ist es vorteilhaft PET Rezyklate (auch scrap-PET genannt) gegebenenfalls in Mischung mit Polyalkylenterephthalaten wie PBT einzusetzen.

Unter Rezyklaten versteht man im allgemeinen:

1) sog. Post Industrial Rezyklat: hierbei handelt es sich um Produktionsabfälle bei der Polykondensation oder bei der Verarbeitung z.B. Angüsse bei der Spritzgussverarbeitung, Anfahrware bei der Spritzgussverarbeitung oder Extrusion oder Randabschnitte von extrudierten Platten oder Folien.

2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise <0,2 %, insbesondere <0,05 %.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel

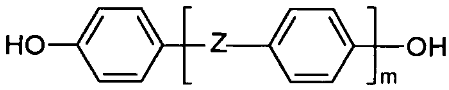

,

in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch $C_1$-$C_6$-Alkyl- oder Alkoxygruppen und Fluor, Chlor oder Brom als Substituenten tragen.

Als Stammkörper dieser Verbindungen seinen beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
di-(hydroxyphenyl)sulfoxid,
$\alpha,\alpha$'-Di-(hydroxyphenyl)-dialkylbenzol,
Di-(hydroxyphenyl)sulfon, Di-(hydroxybenzoyl)benzol
Resorcin und
Hydrochinon sowie deren kernalkylierte oder kernhalogenierte Derivate genannt.

Von diesen werden
4,4'-Dihydroxydiphenyl,
2,4-Di-(4'-hydroxyphenyl)-2-methylbutan
$\alpha,\alpha$'-Di-(4-hydroxyphenyl)-p-diisopropylbenzol,
2,2-Di-(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di-(3',5-dichlordihydroxyphenyl)propan,
1,1 -Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan
oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US_A 3 651 014, beschrieben. Auch im Handel sind entsprechende Produkte erhältlich, z.B. Hytrel® (DuPont).

Als Polyester sollen erfindungsgemäß auch halogenfreie Polycarbonate verstanden werden. Geeignete halogenfreie Polycarbonate sind beispielsweise solche auf Basis von Diphenolen der allgemeinen Formel

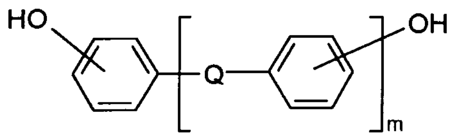

worin Q eine Einfachbindung, eine $C_1$- bis $C_8$-Alkylen-, eine $C_2$- bis $C_3$-Alkyliden-, eine $C_3$- bis $C_6$-Cycloalkylidengruppe, eine $C_6$- bis $C_{12}$-Arylengruppe sowie -O-, -S- oder -$SO_2$- bedeutet und m eine ganze Zahl von 0 bis 2 ist.

Die Diphenole können an den Phenylenresten auch Substituenten haben wie $C_1$- bis $C_6$-Alkyl oder $C_1$- bis $C_6$-Alkoxy.

Bevorzugte Diphenole der Formel sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente A geeignet, bevorzugt sind neben

dem Bisphenol A-Homopolymerisat die Copolycarbonate von Bisphenol A.

Die geeigneten Polykarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten $\eta_{rel}$ von 1,10 bis 1,50, insbesondere von 1,25 bis 1,40 aufweisen. Dies entspricht mittleren Molekulargewichten $M_w$ (Gewichtsmittelwert) von 10 000 bis 200 000, vorzugsweise von 20 000 bis 80 000 g/mol.

Die Diphenole der allgemeinen Formel sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-t-Butylphenol, p-t-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Als weitere geeignete Komponenten A) seien amorphe Polyestercarbonate genannt, wobei Phosgen gegen aromatische Dicarbonsäureeinheiten wie Isophthalsäure und/oder Terephthalsäureeinheiten, bei der Herstellung ersetzt wurde. Für nähere Einzelheiten sei an dieser Stelle auf die EP-A 711 810 verwiesen.

Weitere geeignete Copolycarbonate mit Cycloalkylresten als Monomereinheiten sind in der EP-A 365 916 beschrieben.

Weiterhin kann Bisphenol A durch Bisphenol TMC ersetzt werden. Derartige Polycarbonate sind unter dem Warenzeichen APEC HT® der Firma Bayer erhältlich.

Als Komponente B) enthalten die erfindungsgemäßen Formmassen 0,01 bis 3 vorzugsweise 0,05 bis 2 und insbesondere 0,1 bis 1 Gew.%, bezogen auf 100 Gew.% A) + B), eines Alkalimetallsalzes der salpetrigen Säure oder deren Mischungen.

Die Carboxylendgruppen der Polyester A) reagieren in der Regel mit den Salzverbindungen B), wobei das Metallkation vom Carbonat auf die Endgruppe übertragen wird. Die keimbildende Wirkung der Komponente B) ist schon bei geringsten Konzentrationen nachweisbar. Überraschenderweise nimmt die Lasertransparenz bei sehr geringen Konzentrationen an Komponente B) ab, erst bei höheren Konzentrationen wird eine Steigerung der Lasertransparenz erreicht.

Bevorzugte Alkalimetalle sind Natrium und/oder Kalium.

Bevorzugte Salze B) sind Natriumnitrit und/oder Kaliumnitrit oder deren Mischungen.

Verfahren zur Herstellung genannter anorganischer Salze B) sind dem Fachmann bekannt.

Als Komponente C) können die erfindungsgemäßen Formmassen 0 bis 70, insbesondere bis zu 50 Gew.-% weiterer Zusatzstoffe und Verarbeitungshilfsmittel enthalten, welche verschieden von B) und/oder A) sind, bezogen auf 100 Gew.% A), B) und C).

Übliche Zusatzstoffe C) sind beispielsweise in Mengen bis zu 40, vorzugsweise bis zu 15 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomere vorgestellt.

Bevorzugte Arten von Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien,

nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Mono-merengemisch in den Kautschuk eingebaut

$$R^1C(COOR^2)=C(COOR^3)R^4 \quad (I)$$

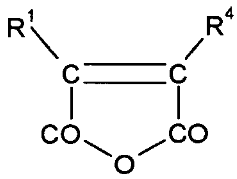

(II)

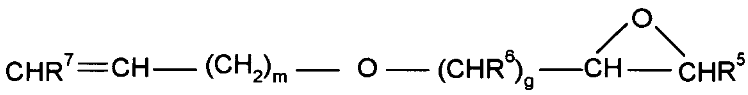

(III)

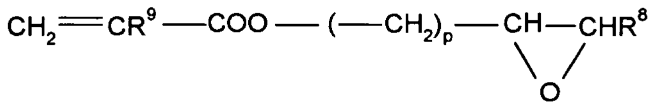

(IV)

wobei $R^1$ bis $R^9$ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste $R^1$ bis $R^9$ Wasserstoff, wobei m für 0 oder 1 und g für 1 steht. Die entsprechenden Verbindungen sind Maleinsäure, Fumarsäure, Maleinsäureanhydrid, Al-lylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus
50 bis 98, insbesondere 55 bis 95 Gew.-% Ethylen,
0,1 bis 40, insbesondere 0,3 bis 20 Gew.-% Glycidylacrylat und/oder Glycidylmethacrylat, (Meth)acrylsäure und/oder Maleinsäureanhydrid, und
1 bis 45, insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propylund i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

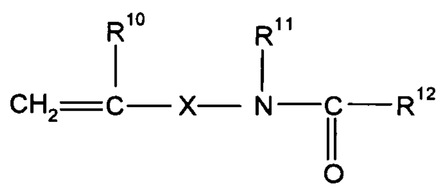

eingeführt werden können,
wobei die Substituenten folgende Bedeutung haben können:

$R^{10}$ Wasserstoff oder eine $C_1$- bis $C_4$-Alkylgruppe,

$R^{11}$ Wasserstoff, eine C1 - bis $C_8$-Alkylgruppe oder eine Arylgruppe, insbesondere Phenyl,

$R^{12}$ Wasserstoff, eine $C_1$- bis $C_{10}$-Alkyl-, eine $C_6$- bis $C_{12}$-Arylgruppe oder $-OR^{13}$

$R^{13}$ eine $C_1$- bis $C_8$-Alkyl- oder $C_6$- bis $C_{12}$-Arylgruppe, die gegebenenfalls mit O- oder N-haltigen Gruppen substituiert sein können,

X eine chemische Bindung, eine $C_1$- bis C10-Alkylen- oder $C_6$-$C_{12}$-Arylengruppe oder

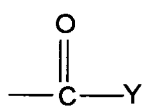

Y O-Z oder NH-Z und

Z eine $C_1$- bis $C_{10}$-Alkylen- oder $C_6$- bis $C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethyl-amino)ethylacrylat, (N,N-Dimethylamino)-methylacrylat und (N,N-Diethylamino)ethylacrylat genannt.

Weiterhin können die Teilchen der Kautschukphase auch vemetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Diese Pfropfpolymerisate, insbesondere ABS- und/oder ASA-Polymere in Mengen bis zu 40 Gew.-%, werden vorzugsweise zur Schlagzähmodifizierung von PBT, gegebenenfalls in Mischung mit bis zu 40 Gew.-% Polyethylenterephthalat eingesetzt. Entsprechende Blend-Produkte sind unter dem Warenzeichen Ultradur®S (ehemals Ultrablend®S der BASF AG) erhältlich.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als faser- oder teilchenförmige Füllstoffe C) seien Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt. Faserförmige Füllstoffe C) werden in Mengen bis zu 60 Gew.-%, insbesondere bis zu 35 Gew.-% eingesetzt, teilchenförmige Füllstoffe werden in Mengen bis zu 30 Gew%, insbesondere bis zu 10 Gew% eingesetzt.

Als bevorzugte faserförmige Füllstoffe seien Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Stark laserabsorbierende Füllstoffe wie beispielsweise Kohlenstofffasem, Russ, Graphit, Graphen oder Kohlenstoffnanoröhrchen werden bevorzugt in Mengen unter 1 Gew.-%, besonders bevorzugt unter 0,05 Gew.-% eingesetzt.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

$$(X\text{-}(CH_2)_n)_k\text{-}Si\text{-}(O\text{-}C_mH_{2m+1})_{4-k}$$

in der die Substituenten folgende Bedeutung haben:

X $NH_2$-,

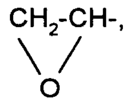 HO-,

n eine ganze Zahl von 2 bis 10, bevorzugt 3 bis 4
m eine ganze Zahl von 1 bis 5, bevorzugt 1 bis 2
k eine ganze Zahl von 1 bis 3, bevorzugt 1.

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,1 bis 1,5 und insbesondere 0,2 bis 0,5 Gew.-% (bezogen auf C) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als Komponente C) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Weichmacher usw. enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische und organische Pigmente sowie Farbstoffe, wie Nigrosin und Anthrachinone als Farbmittel zugesetzt werden. Besonders geeignete Farbmittel sind beispielsweise in EP 1722984 B1, EP 1353986 B1 oder DE 10054859 A1 genannt.

Weiterhin bevorzugt sind Ester oder Amide gesättigter oder ungesättigter aliphatischer Carbonsäuren mit 10 bis 40, bevorzugt 16 bis 22 C-Atomen mit aliphatischen gesättigten Alkoholen oder Aminen die 2 bis 40, vorzugsweise 2 bis 6 C-Atomen enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders

bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weitere Gleit- und Entformungsmittel werden üblicherweise in Mengen bis zu 1 Gew.-% eingesetzt. Es sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfon-amid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluor-propylen-Copolymere oder Tetrafluorethylen-Copolymerisate mit kleineren Anteilen (in der Regel bis zu 50 Gew.-%) copolymerisierbarer ethylenisch ungesättigter Mono-merer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße $d_{50}$ (Zahlenmittelwert) im Bereich von 0,05 bis 10 $\mu$m, insbesondere von 0,1 bis 5 $\mu$m auf. Diese geringen Teilchengrößen lassen sich besonders bevorzugt durch Verwendung von wässrigen Dispersionen von fluorhaltigen Ethylenpolymerisaten und deren Einarbeitung in eine Polyesterschmelze erzielen.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt (z.B. Auftragen, oder Auftrommeln der Komponente B) auf das Granulat) werden und dann die restlichen Ausgangsstoffe einzeln und/oder ebenfalls gemischt hinzugegeben werden. Die Mischtemperaturen liegen in der Regel bei 230 bis 290°C. Vorzugsweise kann Komponente B) auch hot feed oder direkt in den Einzug des Extruders zugegeben werden.

Nach einer weiteren bevorzugten Arbeitsweise können die Komponenten B) sowie gegebenenfalls C) mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäß verwendbaren Formmassen eignen sich zur Herstellung von lasertransparenten Formkörpern. Diese weisen vorzugsweise eine Lasertransparenz (bei 1064nm, gemessen an 2mm dicken Formkörpern nach in den Beispielen beschriebener Messmethode) von mindestens 33%, insbesondere mindestens 40 % auf.

Derartige lasertransparente Formkörper werden erfindungsgemäß zur Herstellung von Formkörpem mittels Laserdurchstrahlschweißverfahren verwendet.

Als laserabsorbierendes Formteil können generell Formkörper aus allen laserabsorbierenden Materialien eingesetzt werden. Dies können beispielsweise Verbundstoffe, Duroplaste oder bevorzugte Formkörper aus eigenen thermoplastischen Formmassen sein. Geeignete thermoplastische Formmassen sind Formmassen, die eine ausreichende Laserabsorption im eingesetzten Wellenlängenbereich besitzen. Geeignete thermoplastische Formmassen können beispielweise bevorzugt Thermoplasten sein, die durch Zusatz von anorganischen Pigmenten wie beispielsweise Ruß und/oder durch Zusatz von organischen Pigmenten oder anderen Additiven laserabsorbierend sind. Geeignete organische Pigmente zur Erzielung von Laserabsorbtion sind beispielsweise bevorzugt IR-absorbierende organische Verbindungen, wie sie beispielsweise in DE 199 16 104 A1 beschrieben sind.

Gegenstand der Erfindung sind ferner Formkörper und/oder Formteilkombinationen, an die erfindungsgemäße Formteile mit dem Laserdurchstrahlschweißen verbunden wurden.

Erfindungsgemäße Formteile eignen sich hervorragend, um mit dem Laserdurchstrahlschweißverfahren an laserabsorbierende Formteile dauerhaft und stabil angebracht werden. Sie eignen sich daher insbesondere für Materialien für Deckel, Gehäuse, Anbauteile, Sensoren beispielsweise für Kfz-, Elektronik-, Telekommunikations-, Informationstechnologie-, Computer-, Haushalts-, Sport-, Medizin- oder Unterhaltungsanwendungen.

Beispiele

Komponente A/1:

Polybutylenterephthalat mit einer Viskositätszahl von 130 ml/g und einem Carboxylendgruppengehalt von 34 mval/kg (Ultradur® B 4500 der BASF SE) (VZ gemessen in 0,5 gew.%iger Lösung aus Phenol/o-Dichlorbenzol, 1:1-Mischung bei 25°C, gemäß ISO 1628).

Komponente B: $NaNO_2$ (Molmasse 69 g/mol)

Alle Compounds wurden auf einem Zweischneckenextruder mit 25 mm Schneckendurchmesser hergestellt. Dosierung der Additive erfolgte mit dem Granulat im Kalteinzug.

Für Lasertransparenzmessungen wurden spritzgegossene Probekörper der Maße 60*60*2mm verwendet. Für Transmissionsmessungen nach Ulbricht wurden spritzgegossene Probekörper der Maße 60*60*1 mm3 verwendet. Zugprüfungen nach ISO 527.
Kalorimetrische Untersuchungen mittels DSC nach ISO 11357, Aufheiz- und Abkühlgeschwindigkeit 20K/min. Die Peaktemperatur der Kristallisation $T_{pc}$ wurde im ersten Abkühllauf ermittelt.

Lasertransparenz-Messung

Die Bestimmung der Lasertransmission bei einer Wellenlänge von 1064 nm wurde mittels einer thermoelektrischen Leistungsmessung durchgeführt. Die Messgeometrie war wie folgt dargestellt: Von einem Laserstrahl (diodengepumpter Nd-YAG-Laser mit einer Wellenlänge von 1064 nm, FOBA DP50) mit einer Gesamtleistung von 2 Watt wurde mittels eines Strahlteilers (Typ SQ2 nichtpolarisierender Strahlteiler von Fa. Laseroptik GmbH) ein Referenzstrahl im Winkel 90° mit 1 Watt Leistung abgeteilt. Dieser traf auf den Referenzsensor. Der den Strahlteiler passierende Teil des ursprünglichen Strahls stellt den Messstrahl mit ebenfalls 1 Watt Leistung dar. Dieser war durch eine Modenblende (5.0) hinter dem Strahlteiler auf einen Fokus mit Durchmesser 0,18μm fokussiert. In einem Abstand von 80 mm unterhalb des Fokus war der Lasertransparenz(LT)-Messsensor positioniert. Die Testplatte wurde in einem Abstand von 2 mm oberhalb des LT-Messsensors positioniert. Es handelt sich um spritzgegossene Testplatten mit den Abmessungen 60*60*2 $mm^3$, mit Kantenanguss. Es wurde in der Plattenmitte (Schnittpunkt der beiden Diagonalen) gemessen. Die Spritzgussparameter wurden auf folgende Werte eingestellt:

| | Massetemp. [°C] | Werkzeugtemp. [°C] | Einspritzgeschw. [$cm^3/s$] | Nachdruck [bar] |
|---|---|---|---|---|
| unverstärkte Materialien | 260 | 60 | 48 | 600 |
| verstärkte Materialien | 260 | 80 | 48 | 600 |

Die gesamte Messdauer betrug 30 s, wobei das Messergebnis in den letzten 5s ermittelt wird. Die Signale von Referenz- und Messsensor wurden zeitgleich erfasst. Der Start der Messung erfolgt zeitgleich mit dem Einlegen der Probe.
Die Transmission und damit die Lasertransparenz ergab sich aus folgender Formel:

$$LT = (Signal(Messsensor) / Signal(Referenzsensor)) \times 100\%.$$

Durch diese Messweise wurden Schwankungen der Laseranlage und subjektive Ablesefehler ausgeschlossen.

Für eine Platte wurde der LT-Mittelwert aus mindestens fünf Messungen gebildet. Die Mittelwertbildung wurde für jedes Material an 10 Platten durchgeführt. Aus den Mittelwerten der Einzelplattenmessungen wurde der Mittelwert sowie die Standardabweichung für das Material errechnet.

Tabelle 1

| Komponente | Menge B) | Menge B) | LT @ 1064nm | E-Modul | Zugfestigkeit | Bruchdehnung | Tpc (Granulat) |
|---|---|---|---|---|---|---|---|
| | [Gew.-%] | [mmol/kg PBT] | [%T] | [MPa] | [MPa] | [%] | [°C] |
| Referenz*) | 0 | 0 | 30 | 2500 | 56 | 170 | 185 |
| B | 0,1 | 15 | 46 | 2650 | 59 | 18 | 191 |
| B | 0,2 | 29 | 60 | 2700 | 60 | 16 | 193 |
| B | 0,3 | 44 | 63 | 2700 | 60 | 16 | 198 |
| B | 0,4 | 58 | 68 | 2750 | 60 | 15 | 198 |

(fortgesetzt)

| Komponente | Menge B) | Menge B) | LT @ 1064nm | E-Modul | Zugfestigkeit | Bruchdehnung | Tpc (Granulat) |
|---|---|---|---|---|---|---|---|
| | [Gew.-%] | [mmol/kg PBT] | [%T] | [MPa] | [MPa] | [%] | [°C] |
| B | 0,5 | 73 | 71 | 2750 | 60 | 12 | 198 |
| *zum Vergleich | | | | | | | |

Transmissionsspektren (Ulbrichtmessung)

Im Wellenlängenbereich von 300 bis 2500nm wurden Transmissionspektren mit einer Ulbrichtkugel-Messgeometrie gemessen. Ulbrichtkugeln sind Hohlkugeln, deren Innenflächen über einen breiten spektralen Bereich hoch und ungerichtet (diffus) reflektieren. Trifft Strahlung auf die Innenfläche der Kugel, so wird sie vielfach reflektiert, bis sie vollständig gleichmäßig in der Kugel verteilt ist. Nach dieser Integration der Strahlung sind alle Einflüsse durch Einfallswinkel, Schattenbildung, Moden, Polarisation und anderer Eigenschaften gemittelt. Der in der Kugel angebrachte Detektor registriert je nach Konfiguration der Ulbrichtkugel nur diffuse Transmission, oder die Summe aus gerichteter und diffuser Transmission (= Gesamttransmission).
Es wurde ein Varian Cary 5000 Spectrometer mit Ulbrichtaufsatz DRA 2500 in Transmissionmodus (Probe zwischen Strahlenquelle und Ulbrichtkugel) verwendet. Zur Messung der Gesamttransmission wurde die Reflexionsöffnung gegenüber der Probe mit einem weißen Reflektor (Labsphere Spectralon Standard) verschlossen. Zur Messung des diffusen Transmissionsanteils wurde die Reflexionsöffnung mit einer schwarzen Lichtfalle verschlossen (DRA 2500 Standard Light Trap). Die Transmission wurde relativ zur eingestrahlten Strahlungsintensität angegeben. Die gerichtete Transmission wurde als Differenz der Gesamttransmission und der diffusen Transmission berechnet. Die Angabe der gerichteten Transmission erfolgt relativ zur Gesamttransmission:

$$\text{gerichtete Transmission} = \frac{(\text{Gesamttransmission - diffuse Transmission}) \times 100\%}{\text{Gesamttransmission}}$$

Tabelle 2:

| Transmissionsmessungen nach Ulbricht an ausgewählten Rezepturen: | | | | |
|---|---|---|---|---|
| Wellenlängenbereich | Gesamttransmission | | Anteil direkte Transmission | |
| [nm] | [%] | | [%] | |
| | Referenz | A + 0,5 [Gew.-%] B | Referenz | A + 0,5 [Gew.-%] B |
| 400 - 500 | 14 - 26 | 3 - 24 | 0 - 2 | 0 - 3 |
| 500 - 600 | 26 - 31 | 24 - 46 | 0 - 2 | 3 - 19 |
| 600 - 700 | 31 - 35 | 46 - 60 | 0 - 2 | 19 - 38 |
| 700 - 800 | 35 - 38 | 60 - 69 | 0 - 2 | 38 - 54 |
| 800 - 900 | 38 - 40 | 69 - 74 | 0 - 2 | 54 - 64 |
| 900 - 1000 | 39 - 42 | 74 - 78 | 0 - 2 | 64 - 72 |
| 1000 - 1100 | 42 - 43 | 78 - 81 | 0 - 2 | 72 - 76 |
| 1100 - 1200 | 33 - 43 | 77 - 81 | 0 - 2 | 74 - 77 |
| 1200 - 1300 | 35 - 44 | 79 - 85 | 0 - 2 | 76 - 82 |
| 1300 - 1400 | 35 - 44 | 80 - 85 | 0 - 2 | 78 - 82 |
| 1400 - 1500 | 34 - 43 | 80 - 85 | 0 - 2 | 78 - 84 |
| 1500 - 1600 | 42 - 44 | 85 - 86 | 0 - 2 | 84 - 84 |

(fortgesetzt)

| Transmissionsmessungen nach Ulbricht an ausgewählten Rezepturen: | | | | |
|---|---|---|---|---|
| Wellenlängenbereich | Gesamttransmission | | Anteil direkte Transmission | |
| [nm] | [%] | | [%] | |
| | Referenz | A + 0,5 [Gew.-%] B | Referenz | A + 0,5 [Gew.-%] B |
| 1600 - 1700 | 9 - 42 | 43 - 86 | 0 - 2 | 42 - 84 |
| 1700 - 1800 | 16 - 26 | 59 - 73 | 0 - 2 | 58 - 72 |
| 1800 - 1900 | 26 - 30 | 73 - 77 | 0 - 2 | 71 - 76 |
| 1900 - 2000 | 27 - 31 | 73 - 77 | 0 - 2 | 72 - 76 |
| 2000 - 2100 | 23 - 31 | 66 - 77 | 0 - 2 | 65 - 76 |

Absorptionsbanden zwischen 1120-1230nm und 1350-1470nm (beide schwach) sowie ab 1610nm (teilweise stark) beeinflussen die Gesamttransmission.

Die Probe mit B) zeichnet sich durch besonders hohe Gesamttransmissionswerte in Verbindung mit hoher direkter Transmission aus (auch im Wellenlängenbereich von 500-800nm). Die Probe ist folglich auch im visuellen Wellenlängenbereich transparent. Gegenstände, die durch die Probe hindurch betrachtet werden, können mit scharfen Kontouren wahrgenommen werden (geringer Haze).

## Patentansprüche

**1.** Verwendung von thermoplastischen Formmassen, enthaltend als wesentliche Komponenten

A) 29 bis 99,99 Gew.-% eines Polyesters,
B) 0,01 bis 3,0 Gew.-% Alkalimetallsalze der salpetrigen Säure oder deren Mischungen,
bezogen auf 100 % Gew.-% A) und B) sowie darüber hinaus
C) 0 bis 70 Gew.-% weiterer Zusatzstoffe, wobei die Summe der Gew.-% A) bis C) 100 % ergibt,
zur Herstellung von lasertransparenten Formkörpern jeglicher Art.

**2.** Verwendung nach Anspruch 1, wobei der Formkörper eine Lasertransparenz von mindestens 33 % (gemessen bei 1064 nm an einem 2 mm dicken Formkörper) aufweist.

**3.** Verwendung nach den Ansprüchen 1 oder 2, wobei das Alkalimetall der Komponente B) Natrium oder Kalium ist.

**4.** Verwendung nach den Ansprüchen 1 bis 3, wobei die Komponente B) aus $NaNO_2$ oder $KNO_2$ oder deren Mischungen aufgebaut ist.

**5.** Verwendung von lasertransparenten Formkörpern gemäß den Ansprüchen 1 bis 4 zur Herstellung von Formkörpem mittels Laserdurchstrahlschweißverfahren.

**6.** Verfahren zur Herstellung von verschweißten Formteilen, **dadurch gekennzeichnet, dass** man lasertransparente Formkörper gemäß Anspruch 5 oder gemäß der Verwendung der Ansprüche 1 bis 4 mit laserabsorbierenden Formkörpern durch Laserdurchstrahlschweißen verbindet.

**7.** Verschweißte Formteile erhältlich gemäß den Ansprüchen 5 oder 6, welche für Anwendungen in Elektro-, Elektronik-, Telekommunikations-, Informationstechnologie, Computer-, Haushalts-, Sport-, Medizin-, KFz- oder Unterhaltungsbereich geeignet sind.

## Claims

**1.** The use of thermoplastic molding compositions comprising, as essential components,

A) from 29 to 99.99% by weight of a polyester,
B) from 0.01 to 3.0% by weight of alkali metal salts of nitrous acid, or a mixture of these,
based on 100% by weight of A) and B), and also moreover
C) from 0 to 70% by weight of further additives, where the total of the % by weight values for A) to C) is 100%,

for producing laser-transparent moldings of any type.

2. The use according to claim 1, where the laser transparency of the molding is at least 33% (measured at 1064 nm on a molding of thickness 2 mm).

3. The use according to claim 1 or 2, where the alkali metal of component B) is sodium or potassium.

4. The use according to claims 1 to 3, where component B) is composed of $NaNO_2$ or $KNO_2$, or a mixture of these.

5. The use of laser-transparent moldings according to claims 1 to 4 for producing moldings by means of laser transmission welding processes.

6. A process for producing welded moldings, which comprises using laser transmission welding to bond laser-transparent moldings according to claim 5 or according to the use in claims 1 to 4 to laser-absorbent moldings.

7. A welded molding obtainable according to claim 5 or 6, which is suitable for applications in the electrical, electronics, telecommunications, information-technology, computer, household, sports, medical, motor-vehicle, or entertainment sector.

## Revendications

1. Utilisation de matériaux de moulage thermoplastiques, contenant en tant que composants essentiels

A) 29 à 99,99 % en poids d'un polyester,
B) 0,01 à 3,0 % en poids de sels de métaux alcalins de l'acide nitreux ou leurs mélanges,
par rapport à 100 % en poids de A) et B), ainsi qu'également
C) 0 à 70 % en poids d'additifs supplémentaires, la somme des % en poids de A) à C) étant de 100 %,

pour la fabrication de corps moulés transparents aux lasers de tout type.

2. Utilisation selon la revendication 1, dans laquelle le corps moulé présente une transparence aux lasers d'au moins 33 % (mesurée à 1 064 nm sur un corps moulé d'une épaisseur de 2 mm).

3. Utilisation selon les revendications 1 ou 2, dans laquelle le métal alcalin du composant B) est le sodium ou le potassium.

4. Utilisation selon les revendications 1 à 3, dans laquelle le composant B) est constitué de $NaNO_2$ ou $KNO_2$ ou leurs mélanges.

5. Utilisation de corps moulés transparents aux lasers selon les revendications 1 à 4 pour la fabrication de corps moulés par des procédés de soudage à rayons lasers.

6. Procédé de fabrication de pièces moulées soudées, **caractérisé en ce que** des corps moulés transparents aux lasers selon la revendication 5 ou selon l'utilisation des revendications 1 à 4 sont reliés par soudage par rayons lasers avec des corps moulés absorbant les lasers.

7. Pièces moulées soudées pouvant être obtenues selon les revendications 5 ou 6, qui sont appropriées pour des applications dans le domaine électrique, électronique, des télécommunications, des technologies d'information, informatique, ménager, sportif, médical, automobile ou des divertissements.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4349505 A
- JP 2004315805 A
- DE 10330722 A1
- JP 2008106217 A
- JP 2008163167 A
- JP 2007186584 A
- JP 2005133087 A
- JP 2009019134 A
- JP 2007169358 A
- DE 4401055 A
- US 3651014 A
- DE OS3334782 A
- DE OS2842005 A
- DE 3506472 A
- EP 711810 A
- EP 365916 A
- EP 208187 A
- EP 50265 A
- US PS4148846 A
- DE 3725576 A
- EP 235690 A
- DE 3800603 A
- EP 319290 A
- EP 1722984 B1
- EP 1353986 B1
- DE 10054859 A1
- DE 19916104 A1


### In der Beschreibung aufgeführte Nicht-Patentliteratur


- *Kunststoffe,* 1997, vol. 87 (11), 1632-1640
- *Kunststoffe,* 1997, vol. 87 (3), 348-350
- *Kunststoffe,* 1998, vol. 88 (2), 210-212
- *Plastverarbeiter,* 1999, vol. 50 (4), 18-19
- *Plastverarbeiter,* 1995, vol. 46 (9), 42-46
- **G. W. EHRENSTEIN.** Handbuch Kunststoff-Verbindungstechnik. Hanser
- Laserstrahlschweißen thermoplastischer Kunststoffe. *DVS-Richtlinie 2243*
- **HOUBEN-WEYL.** Methoden der organischen Chemie. Georg-Thieme-Verlag, 1961, vol. 14/1, 392-406
- **C.B. BUCKNALL.** Toughened Plastics. Applied Science Publishers, 1977
- **SCHILDKNECHT.** Vinyl and Related Polymers. Wiley-Verlag, 1952, 484-494
- **WALL.** Fluorpolymers. Wiley Interscience, 1972